# EUROPÄISCHE PATENTSCHRIFT

(11) **EP 2 718 604 B1**
(45) Veröffentlichungstag und Bekanntmachung des Hinweises auf die Patenterteilung: **04.03.2015**
(21) Anmeldenummer: 12729904.8
(22) Anmeldetag: 30.05.2012
(51) Int. Cl.: F16L 3/10

(54) **SCHALENKUPPLUNG UND DEREN VERWENDUNG**
SHELL COUPLING AND USE THEREOF
ACCOUPLEMENT À COQUILLES ET SON UTILISATION

(30) Priorität: 10.06.2011 DE 102011077346
(43) Veröffentlichungstag der Anmeldung: 16.04.2014
(73) Patentinhaber: Putzmeister Engineering GmbH, 72631 Aichtal (DE)
(72) Erfinder: WESTERMANN, Karl, 72141 Walddorfhäslach (DE)
(74) Vertreter: Wolf, Eckhard
(86) Internationale Anmeldenummer: PCT/EP2012/060113
(87) Internationale Veröffentlichungsnummer: WO 2012/168119

(56) Entgegenhaltungen:
- EP-A1- 1 209 397
- WO-A1-2004/029492
- DE-U1- 9 305 667
- GB-A- 1 388 959
- US-B1- 7 861 982

## Beschreibung

Die Erfindung betrifft eine Schalenkupplung zum paarweisen Kuppeln von Rohren mit zwei im Kupplungszustand eine Kreisöffnung für den Rohrdurchtritt begrenzenden Halbschalen, die an ihrem einen Ende über ein außen liegendes Gelenk um eine zur Kreisöffnung achsparallele Gelenkachse gegeneinander verschwenkbar sind und die an ihrem anderen Ende über einen Spannmechanismus unter Einspannung der zu kuppelnden Rohre lösbar miteinander verbindbar sind.

Eine solche Kupplung ist z.B. aus der DE 9305667 U1 bekannt.

Schalenkupplungen dieser Art werden beispielsweise in Betonförderleitungen als Rohrkupplungen eingesetzt. Im Falle einer Förderleitung, die über einen Betonverteilermast geführt ist, können die Rohre beispielsweise als Rohrsegmente, Rohrbögen oder Rohrkrümmer ausgebildet sein. Die Rohrsegmente der Förderleitung sind dabei an der Außenseite der Mastarme eines Knickmasts entlanggeführt und mittels Rohrhaltern an den Mastarmen fixiert. Die Rohrsegmente sind in ihrem Verlauf über Rohrbögen und Rohrdrehverbindungen gelenkig miteinander verbunden. Bei der Verrohrung von Betonverteilermasten kann es je nach Verrohrungskonzept notwendig sein, die Förderleitung am einen Ende eines Mastarms in ihrer Position zu fixieren. Hierzu ist es bekannt, eine als Anbaukupplung ausgebildete Rohrkupplung zwischen den beiden eine Gelenkbewegung ausführenden Rohrbögen an einem Rohrhalter zu fixieren und gleichzeitig orthogonal dazu das erste auf die Gelenkkupplung folgende Rohrsegment mit einem Bügel oder Spannband hinter seinem einlaufseitigen Bund am benachbarten Mastarm festzuhalten. Diese vergleichsweise aufwendige Konstruktion ist notwendig, weil die bekannten Anbaukupplungen nicht geeignet sind, an ihrem Befestigungsfuß größere Kräfte in Rohrachsrichtung, also quer zur Kupplung, aufzunehmen. Diese Bauweise hat zusätzlich den Nachteil, dass Kräfte, die entlang des Rohrsegments wirken, über den Hebelarm des Rohrbogenstichmaßes in die dafür vorgesehene Anbaukupplung eingeleitet werden. Außerdem kann durch die Verwendung eines Bügels oder Spannbandes als klemmendes Element das Rohrsegment an der Einspannstelle beschädigt werden.

Ausgehend hiervon liegt der Erfindung die Aufgabe zugrunde, eine Schalenkupplung der eingangs angegebenen Art dahingehend zu verbessern, dass die Schalenkupplung als montagefreundliche Anbaukupplung mit verbesserten Kraftübertragungseigenschaften ausgebildet ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, dass die Schalenkupplung eine Montageplatte aufweist, die eine Haltestruktur zur form- und kraftschlüssigen Aufnahme mindestens eines an einer der Halbschalen angeformten Kraftübertragungselements aufweist. Die Montageplatte dient dabei zur Befestigung der Schalenkupplung im Sinne einer Anbaukupplung an der Gegenplatte eines unten näher beschriebenen Rohrhalters.

Gemäß einer bevorzugten Ausgestaltung der Erfindung weist das mindestens eine Kraftübertragungselement eine im Querschnitt keilförmige Kontur auf, während die Haltestruktur mindestens eine Keilaufnahme bildet, wobei die Montageplatte und die zugehörige Halbschale unter Herstellung des Kraftschlusses in Verkeilungsrichtung des mindestens einen Kraftübertragungselements und der Haltestruktur mittels mindestens einer Klemmschraube miteinander verbindbar sind. Mit diesen Maßnahmen wird erreicht, dass zwischen der Montageplatte und der Schalenkupplung eine in Rohrlängsrichtung ausgesteifte klemmende Verbindung erzeugt wird, die einen spielfreien Kraftfluss von der Schalenkupplung in die Montageplatte gewährleistet.

Gemäß einer weiteren bevorzugten Ausgestaltung der Erfindung weist die eine Halbschale zwei in Umfangsrichtung der Keilöffnung in einem Abstand voneinander angeordnete, in ihrem Querschnitt keilförmige Kraftübertragungselemente auf, während die Haltestruktur zwei im Abstand voneinander angeordnete, an die keilförmige Kontur der Kraftübertragungselemente angepasste Keilaufnahmen aufweist. Die Kraftübertragungselemente können dabei einen nach außen konvergierenden und die Keilaufnahmen einen nach außen divergierenden keilförmigen Querschnitt aufweisen.

Gemäß einer weiteren vorteilhaften Ausgestaltung der Erfindung ist die Haitestruktur durch vier an der Montageplatte im Wesentlichen senkrecht über die Plattenebene überstehende, im Umriss dreieckige oder trapezförmige Stützböcke gebildet, von denen jeweils zwei einander paarweise benachbart sind und mit ihren einander zugewandten Kantenflächen die keilförmige Aufnahme für eines der Kraftübertragungselemente begrenzen. Die beiden Stützpaare sind dabei zweckmäßig tangential zur Kreisöffnung im Abstand voneinander angeordnet.

Eine bevorzugte Ausgestaltung der Erfindung sieht vor, dass die eine Halbschale zwischen den beiden Stützbockpaaren tangential zur Kreisöffnung selbstzentrierend angeordnet ist. Dies wird beispielsweise dadurch erreicht, dass die Kraftübertragungselemente und die Haltestruktur im Bereich ihrer Keilflächen je eine tangential zur Kreisöffnung entgegengesetzt ausgerichtete Selbstzentrierungsschräge aufweisen.

Eine weitere vorteilhafte Ausgestaltung der Erfindung sieht vor, dass die Montageplatte und ihre Haltestruktur als einstückiges Guss- oder Schmiedeteil ausgebildet ist. Weiter kann die Montageplatte zwei im Abstand voneinander angeordnete Durchgangslöcher und die eine Halbschale im Bereich der Kraftübertragungselemente zwei in gleichem Abstand wie die Durchgangslöcher angeordnete Gewindebohrungen für die Klemmschrauben aufweisen. Als Beitrag zur Selbstzentrierung weisen die Durchgangslöcher gegenüber den Gewindebohrungen Übermaß auf.

Eine weitere bevorzugte Ausgestaltung der Erfindung sieht vor, dass die Kraftübertragungselemente der einen Halbschale in kraftlos gefügtem Zustand mit ihrer Keilspitze einen Abstand von der Montageplatte aufweisen und dass die Montageplatte durch Anziehen der Klemmschraube unter Bildung des Kraftschlusses bis zur Anlage der Keilspitzen unter gleichzeitiger Selbstzentrierung der Montageplatte gegenüber der Halbschale elastisch verbiegbar ist.

Eine bevorzugte Verwendung der erfindungsgemäßen Schalenkupplung besteht in der Kupplung von an einem Knickmast einer Betonpumpe angeordneten Rohrsegmenten und Rohrbögen, wobei die Montageplatte mit einer an einem Rohrhalter eines Knickarms starr verbundenen Gegenplatte verschraubt oder verschweißt wird.

Die Erfindung bezieht sich außerdem auf eine stationäre oder fahrbare Betonpumpe mit einem Knickmast, mit einer aus Rohrsegmenten und Rohrbögen zusammengesetzten, über den Knickmast geführten Förderleitung und mit an den Mastarmen des Knickmast angeordneten Rohrhaltern für die Förderleitung, wobei zur Verbindung von Rohren der Förderleitung Schalenkupplungen der erfindungsgemäßen Art vorgesehen sind, die über ihre Montageplatte mit zugehörigen Rohrhaltern verbunden sind. Zu diesem Zweck ist an den Rohrhaltern zweckmäßig eine Gegenplatte starr angeordnet, an der die Montageplatte der Schalenkupplung angeschraubt oder angeschweißt ist.

Im Folgenden wird die Erfindung anhand eines in der Zeichnung in schematischer Weise dargestellten Ausführungsbeispiels näher erläutert. Es zeigen
- Fig.1: eine Seitenansicht einer Fahrmischerpumpe mit Betonverteilermast;

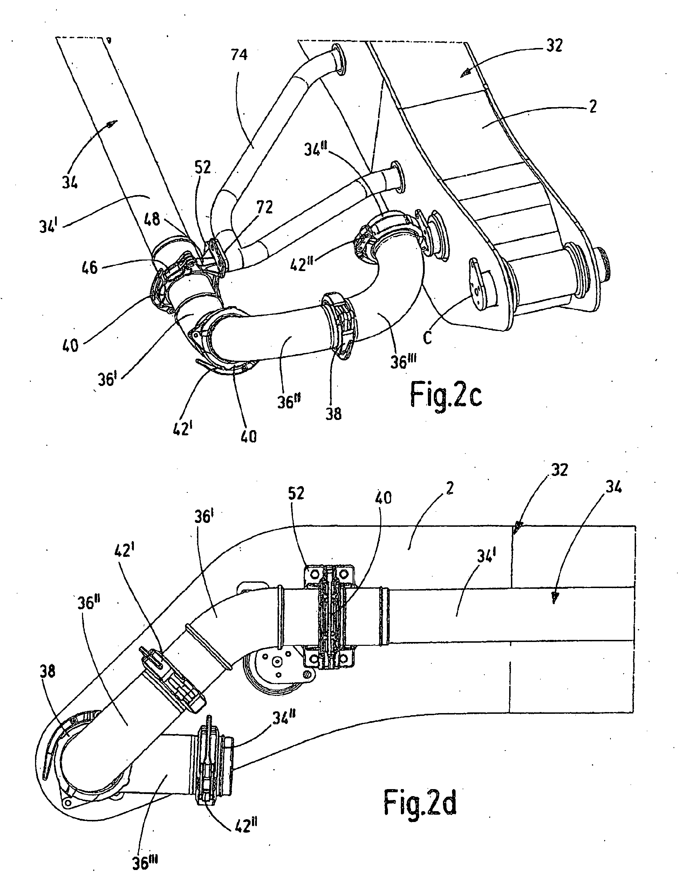

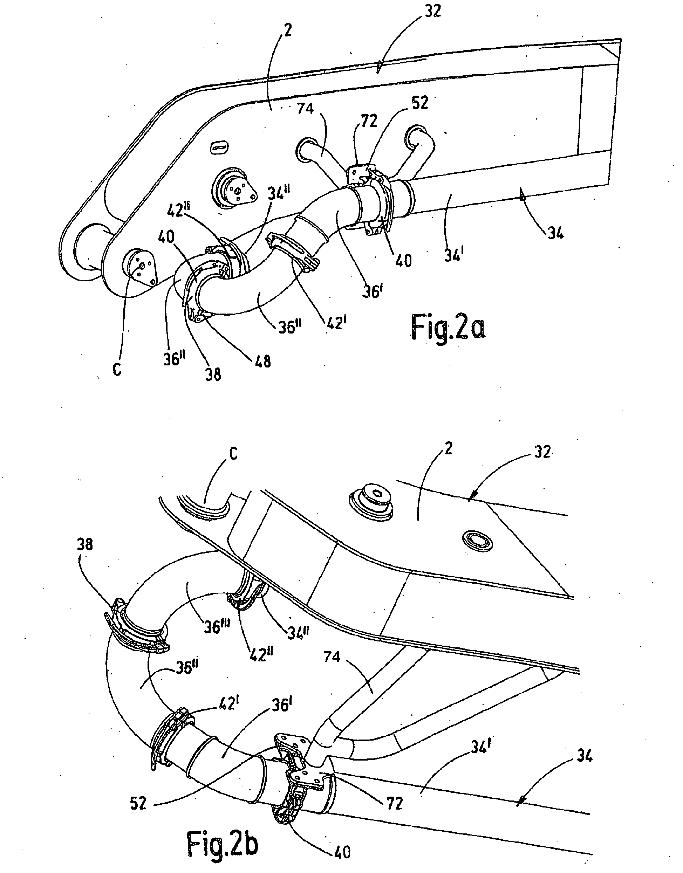

- Fig. 2a: bis d verschiedene Ansichten eines Verteilermasts mit einer aus Rohrsegmenten und Rohrbögen zusammengesetzten Förderleitung im Bereich einer der Knickachsen in ausschnittsweiser vergrößerer Darstellung;

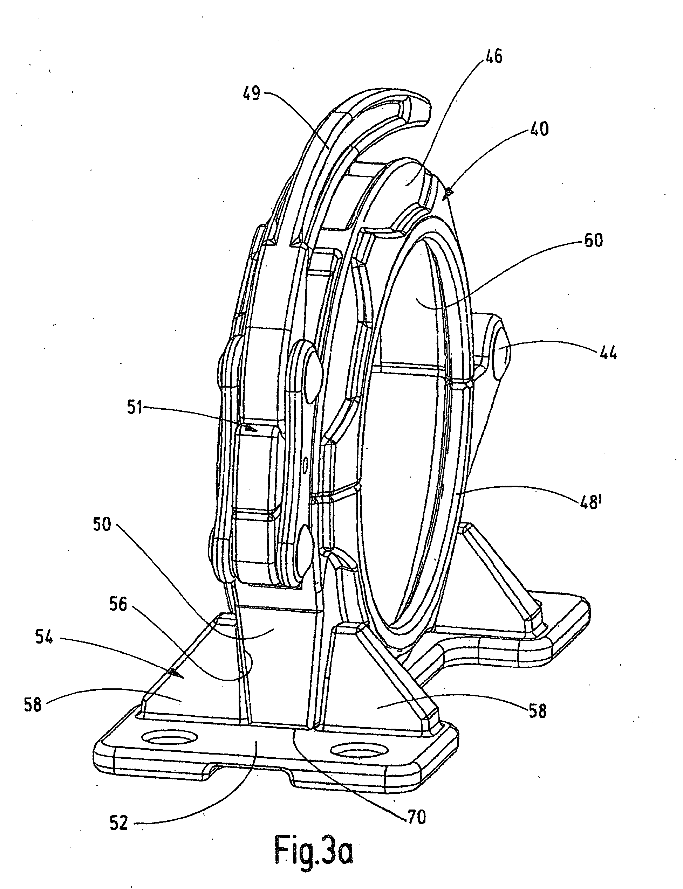

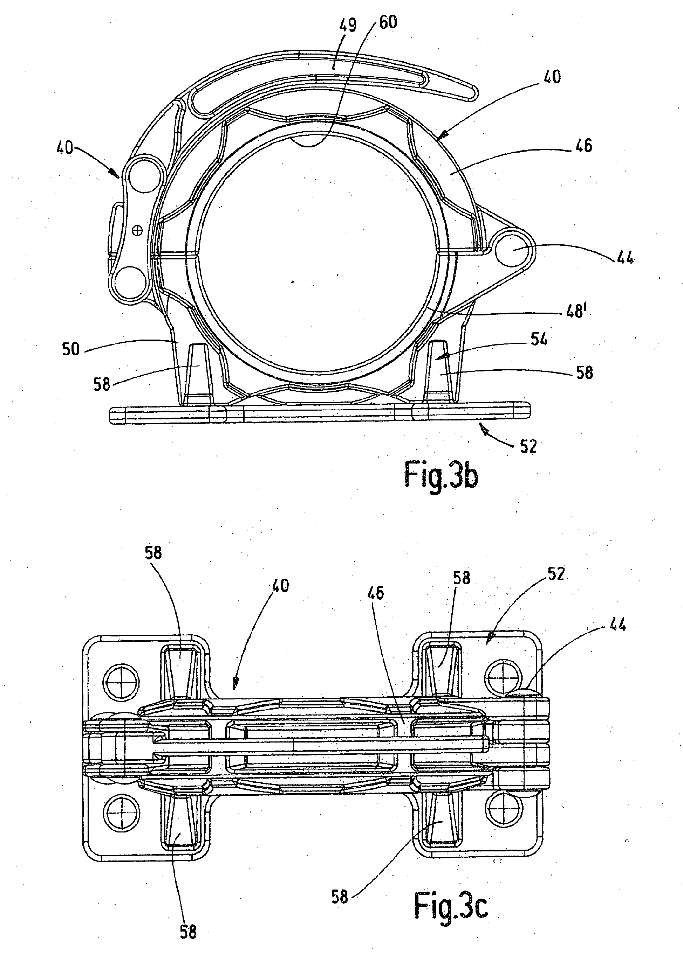

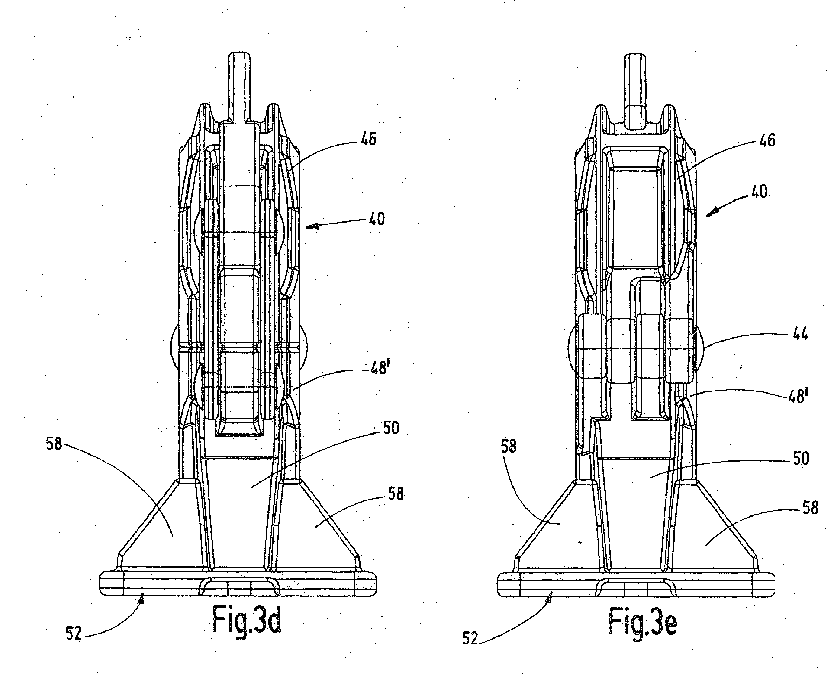

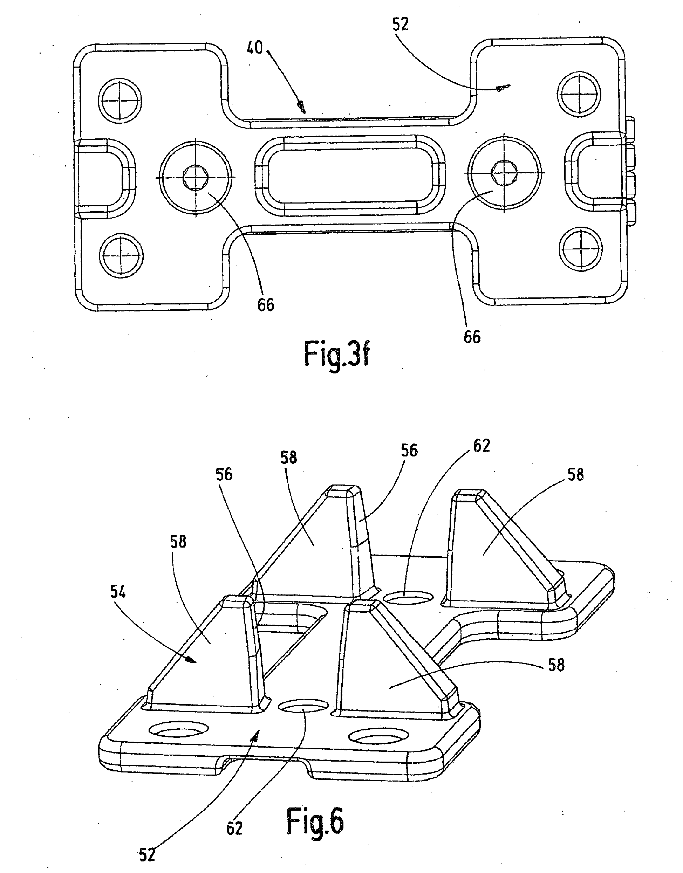

- Fig. 3a: bis f eine als Anbaukupplung ausgebildete Schalenkupplung in schaubildlicher Darstellung, in Achsrichtung der Kreisöffnung, in Draufsicht, in zwei verschiedenen Seitenansichten und in einer Untenansicht;

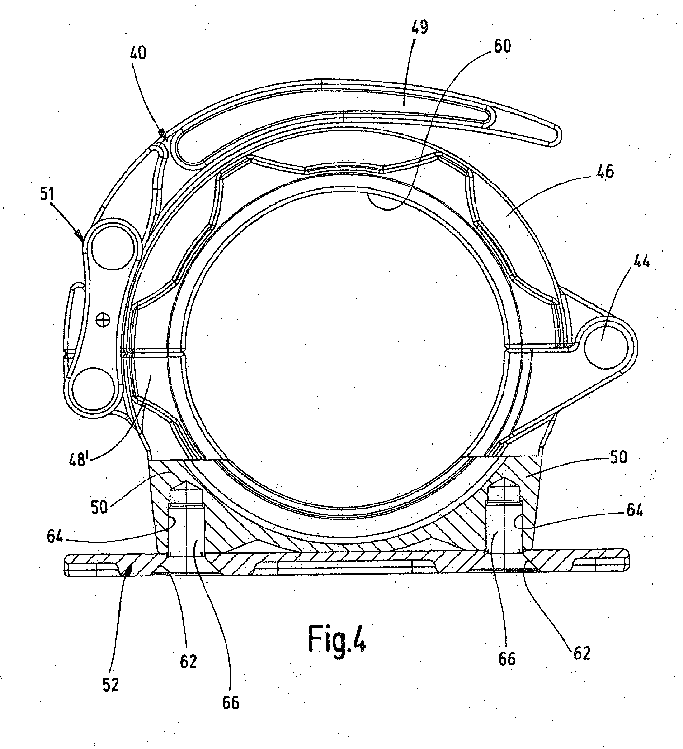

- Fig. 4: eine Seitenansicht entsprechend Fig. 3b in teilweise geschnittener Darstellung;

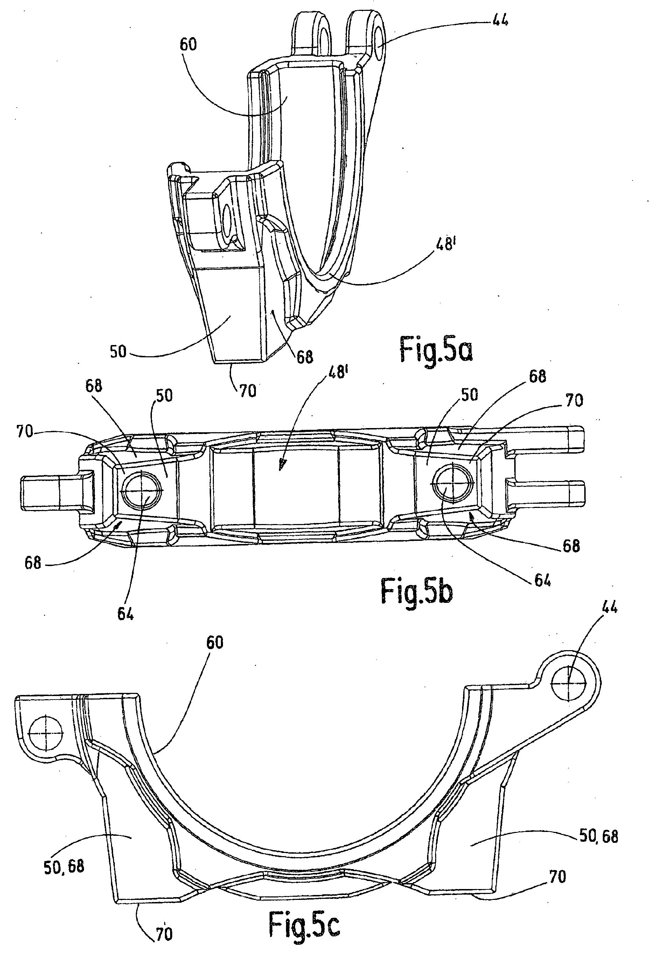

- Fig. 5a: bis c eine der Halbschalen der Schalenkupplung mit Kraftübertragungselementen in schaubildlicher Darstellung, in Untenansicht und in einer Seitenansicht;
- Fig. 6: die Montageplatte der Schalenkupplung in schaubildlicher Darstellung.

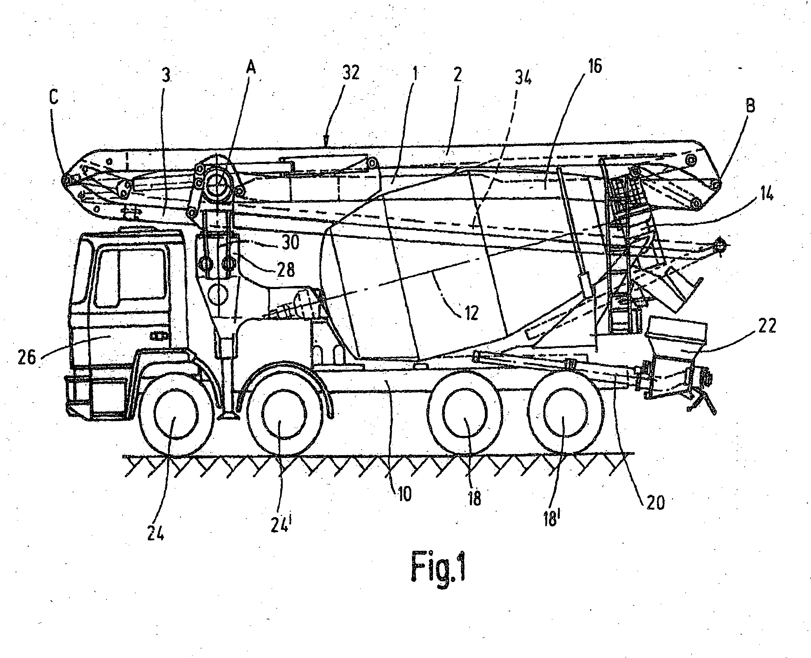

Die in Fig. 1 dargestellte Fahrmischerpumpe besteht im Wesentlichen aus einem vierachsigen Fahrgestell 10, einer im mittleren Bereich des Fahrgestells 10 um die Achse 12 drehbar angeordneten, mit ihrer Beschickungs- und Auslassöffnung 14 schräg nach hinten weisenden Mischtrommel 16, einer im Bereich der Hinterachsen 18,18' am Fahrgestell 10 angeordneten Zweizylinder-Dickstoffpumpe 20 mit Materialaufgabebehälter 22 und einem im Bereich der Vorderachsen 24,24' in der Nähe des Führerhauses 26 an einem Lagerbock 28 um eine vertikale Achse 30 drehbar gelagerten, aus drei an Knickgelenken A,B und C gegeneinander verschwenkbaren Mastarmen 1,2,3 zusammengesetzten Betonverteilermast 32 als Träger für eine Betonförderleitung 34. Die Betonförderleitung 34 ist aus mehreren Rohrsegmenten 34',34" zusammengesetzt, die an den gelenkseitigen Enden der Mastarme 1,2,3 über Rohrbögen 36',36",36"' miteinander verbunden. Die Rohrsegmente 34,34' und die Rohrbögen 36',36",36"' weisen zu diesem Zweck an ihren einander zugewandten Enden je einen radial überstehenden, in der Zeichnung nicht dargestellten Kupplungsflansch auf. Zur Herstellung einer Rohrverbindung sind Schalenkupplungen 38,40,42',42" vorgesehen, von denen die Schalenkupplung 38 als Rohrdrehverbindung mit einer zur Knickachse C parallelen Drehachse ausgebildet ist, während die Schalenkupplung 40 als Anbaukupplung und die Schalenkupplungen 42',42" als Standardkupplungen ausgebildet sind. Die Schalenkupplungen der Rohrdrehverbindung 38, der Anbaukupplung 40 und der Standardkupplungen 42',42" bestehen jeweils aus zwei im Querschnitt U-förmigen, an einem Gelenk 44 miteinander verbundenen Halbschalen 46,48,48', die auf die nicht dargestellten Flanschteile aufgesetzt und mit je einem einen Hebel 49 aufweisenden Spannmechanismus 51 gegen diese verspannt werden können. Im Falle der Anbaukupplung 40 und der Standardkupplungen 42',42" erfolgt die Verbindung form- und kraftschlüssig, während im Falle der Rohrdrehverbindung 38 die Verbindung nur formschlüssig erfolgt, so dass noch eine Drehung um die Achse C möglich ist. Zwischen den durch die Halbschalen 46 sowie 48,48' zusammengehaltenen Flanschteilen befinden sich nicht dargestellte Dichtungsringe, die für eine flüssigkeitsdichte Verbindung sorgen.

Eine Besonderheit bildet die Anbaukupplung 40, deren Halbschale 48' zwei Kraftübertragungselemente 50 sowie eine auf die Kraftübertragungselemente 50 aufgesetzte Montageplatte 52 trägt. Die im Querschnitt eine keilförmige Kontur aufweisenden Kraftübertragungselemente 50 sind an der Halbschale 48' angeformt, während die Montageplatte 52 als getrenntes Teil ausgebildet ist und eine Haltestruktur 54 zur form- und kraftschlüssigen Aufnahme der Kraftübertragungselemente 50 aufweist. Bei dem gezeigten Ausführungsbeispiel weist die Haltestruktur 54 zwei im Abstand voneinander angeordnete, an die keilförmige Kontur der Kraftübertragungselemente 50 angepasste Keilaufnahmen 56 auf, wobei die Keilaufnahmen 56 einen nach außen divergierenden und die Kraftübertragungselemente 50 einen nach außen konvergierenden keilförmigen Querschnitt aufweisen. Die Haltestruktur 54 ist durch vier an der Montageplatte 52 im Wesentlichen senkrecht über die Plattenebene überstehende, im Umriss dreieckige oder trapezförmige Stützböcke 58 gebildet, von denen jeweils zwei einander paarweise benachbart sind und mit ihren einander zugewandten Kantenflächen einer der Keilaufnahmen 56 begrenzen. Die Montageplatte 52 und die Halbschale 48' sind unter Herstellung des Kraftschlusses in Verkeilungsrichtung der Kraftübertragungselemente 50 und der Haltestruktur 54 mittels je einer Klemmschraube 66 miteinander verbindbar. Die Montageplatte weist zu diesem Zweck zwei im Abstand voneinander angeordnete Durchgangslöcher 62 und die Halbschale 48' im Bereich der Kraftübertragungselemente 50 zwei in gleichem Abstand wie die Durchgangslöcher 62 angeordnete Gewindebohrungen 64 für die Klemmschrauben 66 auf. Eine weitere Besonderheit besteht darin, dass die Halbschale 48' mit ihren Kraftübertragungselementen 50 zwischen den beiden Stützbockpaaren 58 tangential zur Kreisöffnung 60 selbstzentrierend angeordnet sind. Dies wird dadurch erreicht, dass die Kraftübertragungselemente 50 je eine tangential zur Kreisöffnung entgegengesetzt ausgerichtete Selbstzentrierungsschräge 68 aufweisen. Um die form- und kraftschlüssige Verspannung zwischen der Halbschale 48' und der Montageplatte 52 zu ermöglichen, weisen die Kraftübertragungselemente der Halbschale 48' im kraftlos gefügten Zustand mit ihrer Keilspitze 70 einen Abstand von der Montageplatte 52 auf, während die Montageplatte 52 durch Anziehen der Klemmschrauben 66 unter Bildung des Kraftschlusses bis zur Anlage der Keilspitzen 70 elastisch verbiegbar ist.

Die als Anbaukupplung ausgebildete Schalenkupplung 40 wird bei dem gezeigten Ausführungsbeispiel zur Kupplung von an den Betonverteilermast 32 der Betonpumpe angeordneten Rohrsegmenten 34',34" und Rohrbögen 36',36",36'" verwendet, wobei die Montageplatte 52 mit einer an einem Rohrhalter 74 eines Mastarms starr verbundenen Gegenplatte 72 verschraubt ist. Der Rohrhalter 74 ist am Mastarm 2 so angeordnet oder angeschweißt, dass er als echtes Festlager für die Förderleitung 34 dient. Die über die Montageplatte an der Gegenplatte 72 angeschraubte Schalenkupplung 40 nimmt die in Richtung der Förderleitung 34 auftretenden Querkräfte auf und überträgt diese so auf den Rohrhalter 74, dass kein zusätzlicher Querhalter erforderlich ist. Auf diese Weise wird mit einfachen Mitteln eine Rohrhalterung erzielt, die im Schwenkbereich des Betonverteilermasts 32 und der Förderleitung 34 eine zuverlässige Kraftübertragung ermöglicht.

Zusammenfassend ist folgendes festzuhalten: Die Erfindung bezieht sich auf eine Schalenkupplung 40 zum paarweisen Kuppeln von Rohren mit zwei im Kupplungszustand eine Kreisöffnung 60 für den Rohrdurchtritt begrenzenden Halbschalen 46,48', die an ihrem einen Ende über ein außen liegendes Gelenk 44 um eine zur Kreisöffnung 60 achsparallele Gelenkachse gegeneinander verschwenkbar sind und die an ihrem anderen Ende über einen Spannmechanismus 51 unter Einspannung der zu kuppelnden Rohre lösbar miteinander verbindbar sind. Zur Aussteifung der Rohrverbindung mit dem Betonverteilermast und zur Verbesserung der in diesem Bereich erforderlichen Kraftübertragung wird gemäß der Erfindung vorgeschlagen, dass die als Anbaukupplung ausgebildete Schalenkupplung 40 eine Montageplatte 52 aufweist, die eine Haltestruktur 54 zur form- und kraftschlüssigen Aufnahme mindestens eines an einer der Halbschalen 48' angeformten Kraftübertragungselements 50 aufweist. Das mindestens eine Kraftübertragungselement 50 weist dabei zweckmäßig eine im Querschnitt keilförmige Kontur auf, während die Haltestruktur 54 mindestens eine Keilaufnahme 56 bildet, wobei die Montageplatte 52 und die eine Halbschale 48' unter Herstellung des Kraftschlusses in Verkeilungsrichtung des Kraftübertragungselements 50 und der Haltestruktur 54 mittels mindestens einer Klemmschraube 66 miteinander verbindbar sind.

### Bezugszeichenliste:

- A,B,C: Knickgelenke
- 1,2,3: Mastarme
- 10: Fahrgestell
- 12: Achse
- 14: Beschickungs- und Auslassöffnung
- 16: Mischtrommel
- 18,18': Hinterachsen
- 20: Zweizylinder-Dickstoffpumpe
- 22: Materialaufgabebehälter
- 24,24': Vorderachsen
- 26: Führerhaus
- 28: Lagerbock
- 30: vertikale Achse
- 32: Betonverteilermast
- 34: Betonförderleitung
- 34',34": Rohrsegmenten
- 36'136",36"': Rohrböden
- 38,40,42',42": Schalenkupplungen
- 44: Gelenk
- 46,48,48': Halbschalen
- 49: Hebel
- 50: Kraftübertragungselement
- 51: Spannmechanismus
- 52: Montageplatten
- 54: Haltestruktur
- 56: Keilaufnahme
- 58: Stützböcke
- 60: Kreisöffnung
- 62: Durchgangslöcher
- 64: Gewindebohrung
- 66: Klemmschraube
- 68: Selbstzentrierungsschräge
- 70: Keilspitze
- 72: Gegenplatte
- 74: Rohrhalter

## Patentansprüche

1. Schalenkupplung zum paarweisen Kuppeln von Rohren mit zwei im Kupplungszustand eine Kreisöffnung (60) für den Rohrdurchtritt begrenzenden Halbschalen (46,48'), die an ihrem einen Ende über ein außen liegendes Gelenk (44) um eine zur Kreisöffnung (60) achsparallele Gelenkachse gegeneinander verschwenkbar sind und die an ihrem anderen Ende über einen Spannmechanismus (51) unter Einspannung der zu kuppelnden Rohre lösbar miteinander verbindbar sind, **gekennzeichnet durch** eine Montageplatte (52), die eine Haltestruktur (54) zur form- und kraftschlüssigen Aufnahme mindestens eines an einer der Halbschalen (48') angeformten Kraftübertragungselements (50) aufweist, wobei das mindestens eine Kraftübertragungselement (50) eine im Querschnitt keilförmige Kontur aufweist, wobei die Haltestruktur (54) mindestens eine Keilaufnahme (56) bildet, und wobei die Montageplatte (52) und die eine Halbschale (48') unter Herstellung des Kraftschlusses in Verkeilungsrichtung des Kraftübertragungselements (50) und der Haltestruktur (54) miteinander verbindbar sind.

2. Schalenkupplung nach Anspruch 1, **dadurch gekennzeichnet, dass** die Montageplatte (52) und die eine Halbschale (48') mittels mindestens einer Klemmschraube (66) verbindbar sind.

3. Schalenkupplung nach Anspruch 1 oder 2, **dadurch gekennzeichnet, dass** die eine Halbschale (48') zwei in Umfangsrichtung der Kreisöffnung (60) in einem Abstand voneinander angeordnete, in ihrem Querschnitt keilförmige Kraftübertragungselemente (50) aufweist, und dass die Haltestruktur (54) zwei im Abstand voneinander angeordnete, an die keilförmige Kontur der Kraftübertragungselemente (50) angepasste Keilaufnahmen (56) aufweist.

4. Schalenkupplung nach Anspruch 3, **dadurch gekennzeichnet, dass** die Kraftübertragungselemente (50) einen nach außen konvergierenden und die Keilaufnahmen (56) einen nach außen divergierenden keilförmigen Querschnitt aufweisen.

5. Schalenkupplung nach Anspruch 3 oder 4, **dadurch gekennzeichnet, dass** die Haltestruktur (54) durch vier an der Montageplatte (52) im Wesentlichen senkrecht über die Plattenebene überstehende, im Umriss dreieckige oder trapezförmige Stützböcke (58) gebildet ist, von denen jeweils zwei einander paarweise benachbart sind und mit ihren einander zugewandten Kantenflächen die Keilaufnahme (56) für eines der Kraftübertragungselemente (50) begrenzen.

6. Schalenkupplung nach Anspruch 5, **dadurch gekennzeichnet, dass** die beiden Stützbockpaare (58) tangential zur Kreisöffnung (60) einen Abstand voneinander aufweisen.

7. Schalenkupplung nach Anspruch 5 oder 6, **dadurch gekennzeichnet, dass** die eine Halbschale (48') zwischen den beiden Stützbockpaaren (58) tangential zur Kreisöffnung (60) selbstzentrierend angeordnet ist.

8. Schalenkupplung nach Anspruch 7, **dadurch gekennzeichnet, dass** die Kraftübertragungselemente (50) und die Haltestruktur (54) im Bereich ihrer Keilflächen je eine tangential zur Kreisöffnung (60) entgegengesetzt ausgerichtete Selbstzentrierungsschräge (68) aufweisen.

9. Schalenkupplung nach einem der Ansprüche 1 bis 8, **dadurch gekennzeichnet, dass** die Montageplatte (52) mit ihrer Haltestruktur (54) als einstückiges Guss- oder Schmiedeteil ausgebildet ist.

10. Schalenkupplung nach einem der Ansprüche 1 bis 9, **dadurch gekennzeichnet, dass** die Montageplatte (52) zwei im Abstand voneinander angeordnete Durchgangslöcher (62) und die eine Halbschale (48') im Bereich der Kraftübertragungselemente (50) zwei in gleichem Abstand wie die Durchgangslöcher (62) ausgebildete Gewindebohrungen (64) für die Klemmschrauben (66) aufweisen.

11. Schalenkupplung nach einem der Ansprüche 1 bis 10, **dadurch gekennzeichnet, dass** die Kraftübertragungselemente (50) der einen Halbschale (48') im kraftlos gefügten Zustand mit ihrer Keilspitze (70) einen Abstand von der Montageplatte (52) aufweisen und dass die Montageplatte (52) durch Anziehen der Klemmschrauben (66) unter Bildung des Kraftschlusses bis zur Anlage der Keilspitzen (70) elastisch verbiegbar ist.

12. Verwendung der Schalenkupplung nach einem der Ansprüche 1 bis 11 zur Kupplung von an einem Verteilermast (32) einer Betonpumpe angeordneten Förderrohren, wobei die Montageplatte mit einer an einem Rohrhalter (74) eines Mastarms (1,2,3) starr verbundenen Gegenplatte (72) verschraubt oder verschweißt ist.

13. Stationäre oder fahrbare Betonpumpe mit einem Verteilermast, mit einer aus Förderrohren zusammengesetzten, über den Verteilermast geführten Förderleitung (34) und mit an den Mastarmen (1,2,3) des Verteilermasts angeordneten Rohrhaltern (74) für die Förderrohre, wobei zur Verbindung von Förderrohren der Förderleitung (34) Schalenkupplungen (40) nach einem der Ansprüche 1 bis 11 vorgesehen sind, die über ihre Montageplatte (52) mit zugehörigen Rohrhaltern (74) verbunden sind.

14. Betonpumpe nach Anspruch 13, **dadurch gekennzeichnet, dass** an den Rohrhaltem (74) eine Gegenplatte (72) starr angeordnet ist, an der die Montageplatte (52) der Schalenkupplung (40) angeschraubt oder angeschweißt ist.

## Claims

1. A shell coupling for coupling pairs of pipes, having two half-shells (46, 48') which, in the coupled state, bound a circular opening (60) for the through-passage of the pipes and, at their one end, can be pivoted in relation to one another, via an outer articulation (44), about an articulation axis axis-parallel to the circular opening (60) and, at their other end, can be connected to one another in a releasable manner via a tensioning mechanism (51), with the pipes which are to be coupled being clamped in in the process, **characterized by** a mounting plate (52), which has a retaining structure (54) by means of which at least one force-transmission element (50) formed on one of the half-shells (48') is accommodated in a form-fitting and force-fitting manner, wherein the at least one force-transmission element (50) has a cross-sectionally wedge-shaped contour, wherein the retaining structure (54) forms at least one wedge mount (56), and wherein the mounting plate (52) and the one half-shell (48') can be connected to one another, with the force fit being made in the process in the wedging direction of the force-transmission element (50) and of the retaining structure (54).

2. The shell coupling as claimed in claim 1, **characterized in that** the mounting plate (52) and the one half-shell (48') can be connected by means of at least one clamping screw (66).

3. The shell coupling as claimed in claim 1 or 2, **characterized in that** the one half-shell (48') has two cross-sectionally wedge-shaped force-transmission elements (50), which are spaced apart from one another in the circumferential direction of the circular opening (60), and **in that** the retaining structure (54) has two spaced-apart wedge mounts (56), which are adapted to the wedge-shaped contour of the force-transmission elements (50).

4. The shell coupling as claimed in claim 3, **characterized in that** the force-transmission elements (50) have an outwardly converging wedge-shaped cross section and the wedge mounts (56) have an outwardly diverging wedge-shaped cross section.

5. The shell coupling as claimed in claim 3 or 4, **characterized in that** the retaining structure (54) is formed by four triangular or trapezoidal supporting blocks (58) which project on the mounting plate (52), essentially vertically above the plane thereof, and of which two each are paired adjacent to one another and have their edge surfaces which are directed toward one another bounding the wedge mount (56) for one of the force-transmission elements (50).

6. The shell coupling as claimed in claim 5, **characterized in that** the two supporting-block pairs (58) are spaced apart from one another tangentially to the circular opening (60).

7. The shell coupling as claimed in claim 5 or 6, **characterized in that** the one half-shell (48') is arranged between the two supporting-block pairs (58) with self-centering action tangentially to the circular opening (60).

8. The shell coupling as claimed in claim 7, **characterized in that** the force-transmission elements (50) and the retaining structure (54), in the region of their wedge surfaces, each have an oppositely oriented self-centering slope (68) tangentially to the circular opening (60).

9. The shell coupling as claimed in one of claims 1 to 8, **characterized in that** the mounting plate (52), with its retaining structure (54), is designed as a single-piece casting or forging.

10. The shell coupling as claimed in one of claims 1 to 9, **characterized in that** the mounting plate (52) has two spaced-apart through-holes (62) and the one half-shell (48'), in the region of the force-transmission elements (50), has two threaded bores (64) which are designed spaced apart by the same distance as the through-holes (62) and are intended for the clamping screws (66).

11. The shell coupling as claimed in one of claims 1 to 10, **characterized in that** the force-transmission elements (50) of the one half-shell (48'), in the state in which they are joined without force being applied, have their wedge tip (70) spaced apart from the mounting plate (52), and **in that** the mounting plate (52) can be flexed elastically by virtue of the clamping screws (66) being tightened, with the force fit being formed in the process, until abutment of the wedge tips (70) takes place.

12. The use of the shell coupling as claimed in one of claims 1 to 11 for coupling delivery pipes arranged on a distributing boom (32) of a concrete pump, wherein the mounting plate is screwed or welded to a counter-plate (72), which is connected rigidly to a pipe holder (74) of a boom arm (1, 2, 3).

13. A stationary or mobile concrete pump having a distributing boom, having a delivery line (34), which is assembled from delivery pipes and is guided via the distributing boom, and having pipe holders (74) for the delivery pipes, said holders being arranged on the arms (1, 2, 3) of the distributing boom, wherein shell couplings (40) as claimed in one of claims 1 to 11 are provided for connecting delivery pipes of the delivery line (34), said shell couplings being connected to associated pipe holders (74) via their mounting plate (52).

14. The concrete pump as claimed in claim 13, **characterized in that** a counter-plate (72) is arranged rigidly on the pipe holders (74), the mounting plate (52) of the shell coupling (40) being screwed or welded on said counter-plate.

## Revendications

1. Accouplement à coquille, dévolu à l'accouplement apparié de tubulures et comprenant deux demi-coquilles (46, 48') qui délimitent, à l'état accouplé, un orifice circulaire (60) dédié au passage desdites tubulures, peuvent pivoter l'une vis-à-vis de l'autre par l'une de leurs extrémités, par l'intermédiaire d'une articulation (44) située à l'extérieur, autour d'un axe d'articulation parallèle à l'axe dudit orifice circulaire (60), et peuvent être reliées l'une à l'autre de manière dissociable par leur autre extrémité, par l'intermédiaire d'un mécanisme de serrage (51), en emprisonnant les tubulures à accoupler, **caractérisé par** une platine de montage (52) munie d'une structure de retenue (54) conçue pour recevoir, par complémentarité de formes et par engagement positif, au moins un élément (50) de transmission de forces faisant corps avec l'une (48') des demi-coquilles, ledit élément (50) de transmission de forces, à présence minimale, étant doté d'un profil de section transversale cunéiforme, ladite structure de retenue (54) formant au moins un logement cunéiforme (56), sachant que ladite platine de montage (52), et la demi-coquille précitée (48'), peuvent être reliées l'une à l'autre en instaurant l'engagement positif dans la direction d'imbrication mutuelle dudit un élément (50) de transmission de forces et de ladite structure de retenue (54).

2. Accouplement à coquille selon la revendication 1, **caractérisé par le fait que** la platine de montage (52), et la demi-coquille précitée (48'), peuvent être reliées l'une à l'autre à l'aide d'au moins une vis de coincement (66).

3. Accouplement à coquille selon la revendication 1 ou 2, **caractérisé par le fait que** la demi-coquille précitée (48') comprend deux éléments (50) de transmission de forces, de section transversale cunéiforme, qui sont situés à distance l'un de l'autre dans la direction du pourtour de l'orifice circulaire (60) ; et **par le fait que** la structure de retenue (54) comprend deux logements cunéiformes (56) placés à distance l'un de l'autre, adaptés au profil cunéiforme desdits éléments (50) de transmission de forces.

4. Accouplement à coquille selon la revendication 3, **caractérisé par le fait que** les éléments (50) de transmission de forces et les logements cunéiformes (56) sont pourvus, respectivement, d'une section transversale cunéiforme convergeant vers l'extérieur et d'une section transversale cunéiforme divergeant vers l'extérieur.

5. Accouplement à coquille selon la revendication 3 ou 4, **caractérisé par le fait que** la structure de retenue (54) est formée par quatre sabots d'appui (58) de configuration triangulaire ou trapézoïdale et faisant saillie, sur la platine de montage (52), pour l'essentiel perpendiculairement au-delà du plan de ladite platine, parmi lesquels deux sont respectivement voisins par paires et délimitent, par leurs surfaces marginales tournées l'une vers l'autre, le logement cunéiforme (56) dédié à l'un des éléments (50) de transmission de forces.

6. Accouplement à coquille selon la revendication 5, **caractérisé par le fait que** les deux paires de sabots d'appui (58) présentent un espacement mutuel tangentiellement par rapport à l'orifice circulaire (60).

7. Accouplement à coquille selon la revendication 5 ou 6, **caractérisé par le fait que** l'une (48') des demi-coquilles est interposée entre les deux paires de sabots d'appui (58) avec effet d'autocentrage, tangentiellement par rapport à l'orifice circulaire (60).

8. Accouplement à coquille selon la revendication 7, **caractérisé par le fait que** les éléments (50) de transmission de forces et la structure de retenue (54) comportent, dans la région de leurs surfaces cunéiformes, un biseau respectif d'autocentrage (68) orienté en sens inverse tangentiellement par rapport à l'orifice circulaire (60).

9. Accouplement à coquille selon l'une des revendications 1 à 8, **caractérisé par le fait que** la platine de montage (52) est réalisée, conjointement à sa structure de retenue (54), sous la forme d'une pièce monobloc venue de coulée ou de forgeage.

10. Accouplement à coquille selon l'une des revendications 1 à 9, **caractérisé par le fait que** la platine de montage (52) présente deux trous de passage (62) situés à distance l'un de l'autre, et la demi-coquille précitée (48') présente, dans la région des éléments (50) de transmission de forces, deux perçages taraudés (64) affectés aux vis de coincement (66) et pratiqués suivant le même espacement que lesdits trous de passage (62).

11. Accouplement à coquille selon l'une des revendications 1 à 10, **caractérisé par le fait que** les éléments (50) de transmission de forces de la demi-coquille précitée (48') sont situés, à l'état assemblé sans application de force, à distance de la platine de montage (52) par la pointe (70) de leur coin ; et **par le fait que** ladite platine de montage (52) peut être ployée élastiquement par serrage des vis de coincement (66), avec instauration de l'engagement positif, jusqu'à la venue en applique des pointes (70) des coins.

12. Utilisation de l'accouplement à coquille conforme à l'une des revendications 1 à 11, en vue de l'accouplement de tubulures convoyeuses implantées sur un mât de distribution (32) d'une pompe à béton, la platine de montage étant rapportée, par vissage ou par soudage, sur une platine complémentaire (72) reliée rigidement à un support (74) de tubulure d'un bras (1, 2, 3) dudit mât.

13. Pompe à béton fixe ou mobile, comprenant un mât de distribution, un conduit de convoyage (34) composé de tubulures convoyeuses et guidé par l'intermédiaire dudit mât de distribution, et des supports (74) dédiés auxdites tubulures convoyeuses et implantés sur les bras (1, 2, 3) dudit mât de distribution, sachant que des accouplements (40) à coquilles, conformes à l'une des revendications 1 à 11, sont prévus pour la liaison de tubulures convoyeuses dudit conduit de convoyage (34) et sont reliés, par l'intermédiaire de leur platine de montage (52), à des supports (74) de tubulures associés.

14. Pompe à béton selon la revendication 13, **caractérisée par le fait qu'**une platine complémentaire (72), sur laquelle la platine de montage (52) de l'accouplement (40) à coquille est rapportée par vissage ou par soudage, est implantée rigidement sur les supports (74) de tubulures.
